# FASCICULE DE BREVET EUROPEEN

(11) **EP 0 566 470 B1**
(45) Date de publication et mention de la délivrance du brevet: **26.06.1996**
(21) Numéro de dépôt: 93400951.5
(22) Date de dépôt: 13.04.1993
(51) Int. Cl.: B60S 1/52, H01R 9/09

(54) **Dispositif d'essuyage et de lavage d'une glace de véhicule automobile**
Wisch- und Waschanlage für Scheiben von Kraftfahrzeugen
Apparatus for wiping and washing the windscreen of a vehicle

(30) Priorité: 14.04.1992 FR 9204559
(43) Date de publication de la demande: 20.10.1993
(73) Titulaire: VALEO SYSTEMES D'ESSUYAGE, 78180 Montigny-Le-Bretonneux (FR)
(72) Inventeur: Schon, Wilfrid, F-63580 St. Etienne/Usson (FR)
(74) Mandataire: Gamonal, Didier

(56) Documents cités:
- DE-A- 2 337 774
- FR-A- 2 220 406
- US-A- 3 940 068

## Description

La présente invention concerne un dispositif d'essuyage et le lavage d'une glace de véhicule automobile.

L'invention concerne plus particulièrement un dispositif du type de celui décrit et représenté dans le document FR-A-2.379.411 qui comporte un essuie-glace qui comprend un balai d'essuie-glace et un bras d'essuie-glace pour entraîner le balai d'essuie-glace dans un mouvement oscillant d'essuyage de la glace et du type comportant une buse d'aspersion de la glace par un liquide de lavage qui est fixée à l'essuie-glace et qui est reliée à des moyens d'alimentation en liquide de lavage sous pression.

Dans ce document, la buse est réalisée sous la forme d'un organe qui est agencé latéralement par rapport au bras d'essuie-glace et à l'étrier principal de la structure de support de la lame d'essuyage. Le corps de la buse est disposé de manière que ses trois orifices d'aspersion produisent la formation de trois jets d'aspersion de la surface à essuyer qui s'étendent dans un plan sensiblement parallèle à cette surface et selon trois directions dont l'une est perpendiculaire à la direction longitudinale de l'essuie-glace et dont chacune des deux autres forme un angle aigu par rapport à cette première direction, les trois jets étant situés d'un même côté de l'essuie-glace.

Cet agencement présente divers inconvénients.

Les trois jets d'aspersion sont situés dans une zone fortement perturbée par le vent relatif auquel est soumis l'essuie-glace lorsqu'il est en fonctionnement sur le véhicule.

L'aspersion n'est possible que d'un seul côté de l'essuie-glace.

Le corps de la buse d'aspersion est agencé dans une zone non protégée dans laquelle il peut être soumis à des chocs risquant de le détériorer.

Dans le document FR-A-2.220.406 il est décrit un dispositif d'essuyage et de lavage d'une glace de véhicule automobile, comportant un essuie-glace comprenant un balai d'essuie-glace et un bras d'essuie-glace pour entraîner le balai d'essuie-glace dans un mouvement oscillant d'essuyage de la glace ainsi qu'une buse d'aspersion de la glace qui est fixée à l'essuie-glace et qui est reliée à des moyens d'alimentation en liquide de lavage, cette buse comportant un corps de buse et des moyens de fixation du corps de buse sur un tronçon du bras d'essuie-glace.

Dans ce document le corps de la buse d'aspersion comporte une face qui est en appui contre la face inférieure du tronçon et une face ouverte qui est fermée par un couvercle.

De plus, il est prévu un pion d'immobilisation qui coopère avec un trou formé dans le tronçon du bras d'essuie-glace.

En outre, dans le document DE-A-2.337.774, il est mentionné que la buse d'aspersion de liquide est reliée à un tronçon du bras d'essuyage par collier qui entoure ledit tronçon.

Ces dispositifs d'essuyage et de lavage présentent l'inconvénient, selon lequel le mode de liaison du corps de la buse d'aspersion à l'essuie-glace nécessite une forme de réalisation complexe de la buse d'aspersion afin notamment de pouvoir permettre son montage et son accrochage.

Afin de remédier à ces inconvénients, l'invention propose un dispositif d'essuyage et de lavage du type mentionné précédemment et divulgué, par exemple, dans FR-A-2 220 406, caractérisé en ce que le pion est réalisé venu de matière avec le couvercle en s'étendant à partir de la face interne de ce dernier.

Selon divers modes de réalisation de l'invention :
- la buse d'aspersion est agencée sous la face inférieure d'une portion plane du bras d'essuie-glace ;
- le corps de la buse d'aspersion comporte une chambre d'aspersion reliée aux moyens d'alimentation en liquide de lavage et qui comporte plusieurs orifices d'aspersion ;
- l'un des orifices d'aspersion est agencé de manière à asperger la surface à essuyer par un jet dont l'axe s'étend sensiblement parallèlement à la direction longitudinale de la portion du bras ;
- deux des orifices d'aspersion sont agencés de manière à asperger la surface à essuyer par deux jets dont les axes s'étendent respectivement de part et d'autre du bras en formant un angle aigu par rapport à la direction longitudinale de la portion du bras ;
- en position fermée du couvercle de la buse d'aspersion, le pion d'immobilisation s'étend en dehors de la chambre d'aspersion ;
- le corps de la buse d'aspersion comporte une cloison latérale qui entoure le pion d'immobilisation de manière à le protéger contre les chocs ; et
- la buse d'aspersion est réalisée en matière plastique moulée.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en perspective d'un dispositif d'essuyage et de lavage réalisé conformément aux enseignements de l'invention ;
- la figure 2 est une vue en coupe longitudinale à plus grande échelle de la buse d'aspersion en position montée sur une portion du bras d'essuie-glace ; et
- la figure 3 est une vue en perspective éclatée permettant d'illustrer le montage de la buse d'aspersion sur le bras d'essuie-glace.

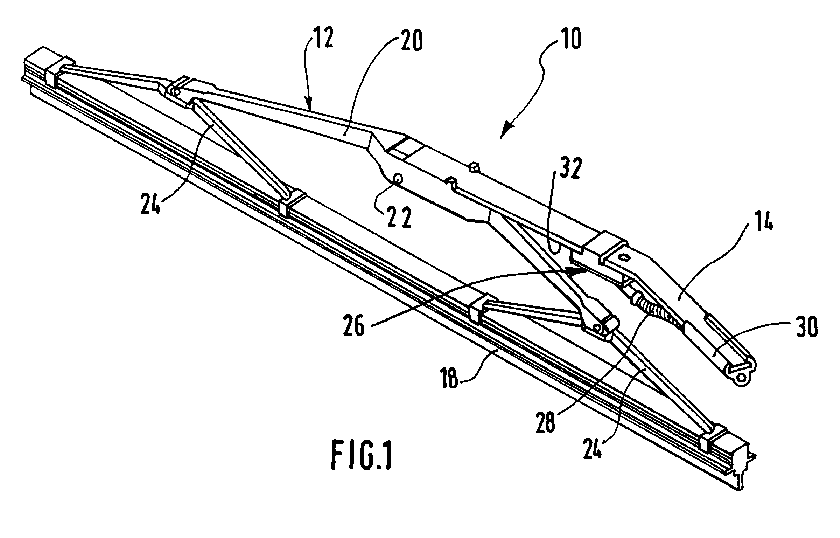

On reconnaît à la figure 1 un essuie-glace 10 du type comportant un balai d'essuie-glace 12 qui est relié à un bras d'essuie-glace 14 de manière à permettre l'entraînement du balai 12 dans un mouvement oscillant afin de procéder à l'essuyage d'une glace de véhicule automobile, telle qu'un pare-brise 16, au moyen d'une lame d'essuyage 18.

Le balai d'essuie-glace 12 est, dans le mode de réalisation illustré à la figure 1, constitué par un étrier principal 20 articulé autour d'un axe 22 sur le bras d'essuie-glace 14 et dont les extrémités portent deux étriers intermédiaires 24 qui sont articulés par rapport à l'étrier principal 20 et qui portent la lame d'essuyage 18.

L'essuie-glace 10 illustré à la figure 1 comporte également des moyens pour assurer le lavage de la surface à essuyer.

Ces moyens sont constitués pour l'essentiel par une buse d'aspersion 26 qui est reliée à une source d'alimentation en fluide de lavage sous pression (non représentée) qui est reliée à la buse d'aspersion 26 par un conduit 28 d'amenée du liquide de lavage qui s'étend longitudinalement sous le bras d'essuie-glace 14 et qui est maintenu le long de ce dernier par l'intermédiaire d'une gouttière 30 dans laquelle il est logé, la gouttière 30 pouvant être montée par emboîtement élastique sur le bras 14.

Comme on peut le constater à la figure 1, la buse d'aspersion 26 est disposée entre la face inférieure 32 du bras d'essuie-glace 14 et la surface à essuyer.

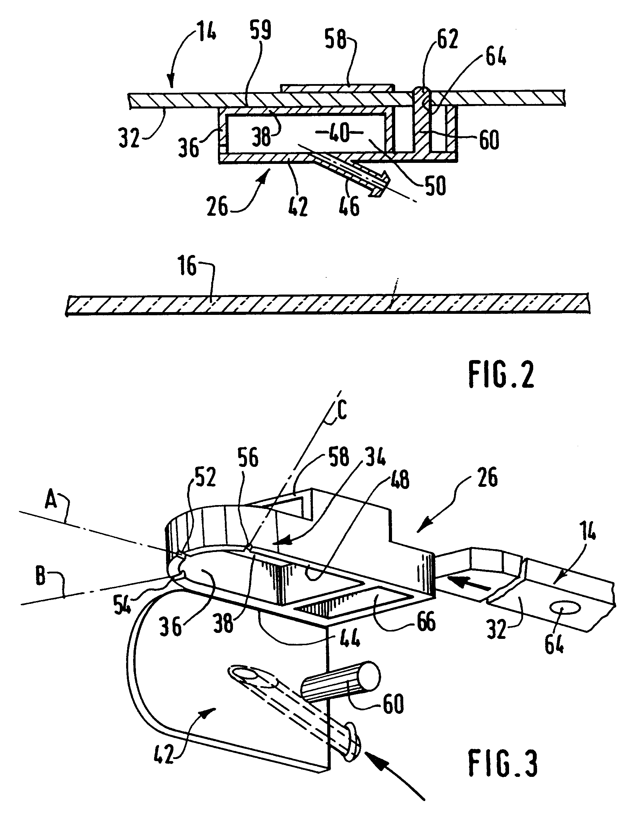

Ce positionnement particulièrement avantageux est dû à la conformation de la buse d'aspersion et à ses moyens de montage sur le bras d'essuie-glace 14 qui seront maintenant décrits en détail en se reportant aux figures 2 et 3.

La portion du bras d'essuie-glace 14 qui reçoit la buse d'aspersion 26 est une portion en forme de lame plane, constituée par un fer plat qui s'étend dans un plan parallèle à celui de la surface à essuyer 16.

La buse d'aspersion 26 est une pièce réalisée par moulage en matière plastique.

Elle est constituée par un corps de buse 34 qui est délimité latéralement par une cloison périphérique 36 et par un fond plan 38.

La cloison 36 et le fond 38 délimitent une chambre interne d'aspersion 40 qui est fermée par un couvercle 42 qui, dans sa position fermée illustrée à la figure 2, est parallèle au fond plan 38.

Le couvercle 42 est monté articulé sur le corps 34 de la buse d'aspersion 26 au voisinage d'un de ses bords longitudinaux 44.

A titre d'exemple, le couvercle 42 peut être réalisé venu de matière par moulage avec le corps 34, la charnière d'articulation 44 étant constituée par une portion amincie de la pièce unique.

Le couvercle 42 comporte un embout 46 de raccordement du conduit 28 à la chambre d'aspersion 40 afin de permettre son remplissage par du liquide de lavage sous pression.

Le bord inférieur 48 de la paroi latérale 36 avec lequel vient coopérer de manière étanche la face interne 50 du couvercle 42, comporte trois orifices d'aspersion 52, 54 et 56.

La fixation du corps de la buse 26 sur le bras d'essuie-glace 14 est réalisée au moyen d'un collier de fixation 58 qui est réalisé venu de matière avec le corps 34 de la buse 26.

Le collier 58 présente une section rectangulaire complémentaire de celle de la portion en forme de lame du bras d'essuie-glace 14 afin de permettre à ce dernier d'être enfilé longitudinalement dans le collier 58 de façon que la face supérieure 59 du fond 38 vienne en appui plan contre la face inférieure 32 du bras d'essuie-glace 14.

La buse 26 est ainsi accrochée et maintenue latéralement sur le bras d'essuie-glace 14.

L'immobilisation longitudinale de la buse 26 par rapport au bras 14 est obtenue au moyen d'un pion d'immobilisation 60 dont l'extrémité libre 62 est reçue dans un trou de diamètre correspondant 64 formé dans le bras d'essuie-glace 14.

Dans le mode de réalisation illustré sur les figures, le pion d'immobilisation 60 est réalisé venu de matière avec le couvercle 42 et il s'étend depuis la face interne 50 de ce dernier selon une direction perpendiculaire au plan du couvercle.

En position fermée, le pion d'immobilisation 60 est protégé contre les chocs susceptibles de l'endommager, par une paroi latérale 66 du corps de buse 34 qui l'entoure.

Le montage de la buse 26 sur le bras d'essuie-glace 14 s'effectue de la manière suivante.

Comme cela est illustré à la figure 3, l'opérateur introduit le bras d'essuie-glace 14 dans le collier 58 de manière à amener les deux composants dans leur position longitudinale relative illustrée à la figure 2.

Dans cette position, l'opérateur n'a plus qu'à provoquer la fermeture du couvercle 42 en le faisant pivoter autour de la charnière 44 de manière que l'extrémité 62 du pion d'immobilisation 60 pénètre dans le trou 64 du bras d'essuie-glace 14.

La buse d'aspersion 26 est ainsi immobilisée longitudinalement par rapport au bras d'essuie-glace 14.

En position montée sur le bras d'essuie-glace 14, on constate que le premier orifice d'aspersion 52 est orienté de manière que l'axe A de son jet d'aspersion s'étende selon une direction parallèle à la portion du bras d'essuie-glace 14 qui est reçu dans le collier 58 et en dessous du bras qui protège le jet A.

Les deux orifices 54 et 56 sont agencés symétriquement de part et d'autre de l'orifice 52 de manière que les axes B et C des jets qu'ils produisent s'étendent de part et d'autre de l'axe longitudinal du balai d'essuie-glace 14 et forment un angle aigu avec l'axe A.

L'étanchéité de la chambre d'aspersion 40 et la fermeture du couvercle 42 peuvent être assurés par collage de ce dernier, ou par exemple par soudage aux ultrasons.

## Revendications

1. Dispositif (10) d'essuyage et de lavage d'une glace (16) de véhicule automobile, du type comportant un essuie-glace (10) comprenant un balai d'essuie-glace (12) et un bras d'essuie-glace (14) pour entraîner le balai d'essuie-glace (12) dans un mouvement oscillant d'essuyage de la glace (16) et du type comportant une buse (26) d'aspersion de la glace (16) qui est fixée à l'essuie-glace (10) et qui est reliée à des moyens d'alimentation en liquide de lavage, cette buse (26) comportant un corps de buse (34) délimité par un fond plan (38) et par une cloison latérale périphérique (36) dont le bord inférieur (48) coopère de manière étanche avec le couvercle (42) ainsi que des moyens de fixation du corps de buse sur un tronçon du bras d'essuie-glace (14), lesdits moyens de fixation comportant une portion formant collier de fixation (58) qui entoure le tronçon du bras d'essuie-glace (14) et ledit corps (34) de la buse d'aspersion (26) comportant une face (38) qui est en appui contre la face inférieure (32) du tronçon (14) et une face ouverte qui est fermée par un couvercle (42) dont la face interne (50) porte un pion d'immobilisation (60) qui coopère avec un trou (64) formé dans le tronçon du bras d'essuie-glace (14), caractérisé en ce que le pion (60) est réalisé venu de matière avec le couvercle (42) en s'étendant à partir de la face interne de ce dernier.

2. Dispositif d'essuyage et de lavage selon la revendication 1, caractérisé en ce que la buse d'aspersion (26) est agencée sous la face inférieure (32) d'une portion (14) du bras d'essuie-glace.

3. Dispositif d'essuyage et de lavage selon la revendication 1 ou 2, caractérisé en ce que le corps (34) de la buse comporte une chambre d'aspersion (40) reliée aux moyens d'alimentation en liquide de lavage et qui comporte plusieurs orifices d'aspersion (52, 54, 56).

4. Dispositif d'essuyage et de lavage selon la revendication 3, caractérisé en ce que l'un (52) des orifices d'aspersion est agencé de manière à asperger la surface à essuyer (16) par un jet dont l'axe (A) s'étend parallèlement à la direction longitudinale de la portion en forme de lame du bras d'essuie-glace (14).

5. Dispositif d'essuyage et de lavage selon l'une des revendications 3 ou 4, caractérisé en ce que deux (54, 56) des orifices d'aspersion sont agencés de manière à asperger la surface à essuyer (16) par deux jets dont les axes (B,C) s'étendent respectivement de part et d'autre du bras d'essuie-glace (14) en formant un angle aigu par rapport à la direction longitudinale de la portion en forme de lame du bras (14).

6. Dispositif d'essuyage et de lavage selon l'une quelconque des revendications 1 à 5, caractérisé en ce que, en position fermée du couvercle (42), le pion d'immobilisation (60) s'étend en dehors de la chambre d'aspersion (40).

7. Dispositif d'essuyage et de lavage selon la revendication 6, caractérisé en ce que le corps (34) de la buse d'aspersion (26) comporte une cloison latérale (66) qui entoure le pion d'immobilisation (60) de manière à le protéger contre les chocs.

8. Dispositif d'essuyage et de lavage selon l'une quelconque des revendications précédentes, caractérisé en ce que la buse d'aspersion (26) est réalisée en matière plastique moulée.

## Claims

1. Apparatus (10) for wiping and washing a motor vehicle glass (16), of the type comprising a screen wiper (10) that includes a screen wiper blade (12) and a screen wiper arm (14) for driving the screen wiper blade (12) in oscillating motion for wiping the glass (16), and of the type that includes, for spraying the glass (16), a nozzle (26) which is fixed to the screen wiper (10) and which is connected to washing liquid supply means, the said nozzle (26) including a nozzle body (34), which is defined by a flat base (38) and by a peripheral side wall (36) the lower edge (48) of which cooperates sealingly with the cover (42), together with means for fastening the nozzle body on to a portion of the screen wiper arm (14), the said fastening means comprising a portion defining a fastening collar (58) which surrounds the said portion of the screen wiper arm (14), with the said body (34) of the spray nozzle (26) having a face (38) which is in engagement against the lower surface (32) of the said portion of the arm (14), together with an open face which is closed by a cover (42), the inner face (50) of which carries a securing pin (60) that cooperates with a hole (64) formed in the said portion of the screen wiper arm (14), characterised in that the pin (60) is integral with the cover (42) and projects from the inner face of the latter.

2. Wiping and washing apparatus according to Claim 1, characterised in that the spray nozzle (26) is disposed under the lower surface (32) of a portion of the screen wiper arm (14).

3. Wiping and washing apparatus according to Claim 1 or Claim 2, characterised in that the body (34) of the nozzle includes a spray chamber (40) which is connected to the washing liquid supply means, and which has a plurality of spray orifices (52, 54, 56).

4. Wiping and washing apparatus according to Claim 3, characterised in that one (52) of the spray orifices is so arranged as to spray the surface (16) to be washed with a jet, the axis (A) of which extends parallel to the longitudinal direction of the laminar portion of the screen wiper arm (14).

5. Wiping and washing apparatus according to Claim 3 or Claim 4, characterised in that two (54, 56) of the spray orifices are so arranged as to spray the surface (16) to be washed with two jets, the axes (B, C) of which extend respectively on either side of the screen wiper arm (14), to define an acute angle with respect to the longitudinal direction of the laminar portion of the arm (14).

6. Wiping and washing apparatus according to any one of Claims 1 to 5, characterised in that, in the closed position of the cover (42), the securing pin (60) lies outside the spray chamber (40).

7. Wiping and washing apparatus according to Claim 6, characterised in that the body (34) of the spray nozzle (26) includes a lateral wall (66) which surrounds the securing pin (60) in such a way as to protect it against shocks.

8. Wiping and washing apparatus according to any one of the preceding Claims, characterised in that the spray nozzle (26) is made of moulded plastics material.

## Patentansprüche

1. Wisch- und Waschanlage (10) für Scheiben von Kraftfahrzeugen, mit einem Scheibenwischer (10), der aus einem Wischerblatt (12) und einem Scheibenwischerarm (14) für die Mitnahme des Wischerblatts (12) in einer Pendelbewegung zum Wischen der Scheibe (16) besteht, sowie mit einer Spritzdüse (26) zum Bespritzen der Scheibe (16), die am Scheibenwischer (10) befestigt und mit Mitteln für die Zuleitung der unter Druck stehenden Waschflüssigkeit verbunden ist, wobei diese Düse (26) einen Düsenkörper (34) umfaßt, der durch einen ebenen Boden (38) und eine seitliche Umfangswand (36) begrenzt ist, deren Unterkante (48) dicht mit dem Deckel (42) zusammenwirkt, sowie Mittel zur Befestigung des Düsenkörpers an einem Teilstück des Scheibenwischerarms (14), wobei die besagten Befestigungsmittel einen Abschnitt umfassen, der eine Befestigungsklemme (58) bildet, die das Teilstück des Scheibenwischerarms (14) umschließt, und wobei der besagte Körper (34) der Spritzdüse (26) eine Fläche (38), die an der Unterseite (32) des Teilstücks (14) anliegt, und eine offene Fläche umfaßt, die durch einen Deckel (42) verschlossen wird, an dessen Innenseite (50) sich ein Sicherungsstift (60) befindet, der mit einem im Teilstück des Scheibenwischerarms (14) vorgesehenen Loch (64) zusammenwirkt , **dadurch gekennzeichnet**, daß der Stift (60) einstückig mit dem Deckel (42) ausgeführt ist und sich von dessen Innenseite aus erstreckt.

2. Wisch- und Waschanlage nach Anspruch 1 , **dadurch gekennzeichnet**, daß die Spritzdüse (26) unter der Unterseite (32) eines Abschnitts (14) des Scheibenwischerarms angeordnet ist.

3. Wisch- und Waschanlage nach Anspruch 1 oder 2, **dadurch gekennzeichnet**, daß der Körper (34) der Spritzdüse eine Spritzkammer (40) umfaßt, die mit Mitteln für die Zuleitung von Waschflüssigkeit verbunden ist und die mehrere Spritzöffnungen (52, 54, 56) enthält.

4. Wisch- und Waschanlage nach Anspruch 3 , **dadurch gekennzeichnet**, daß eine (52) der Spritzöffnungen so angeordnet ist, daß sie auf die zu wischende Fläche (16) einen Strahl aufspritzt, dessen Achse (A) sich in etwa parallel zur Längsrichtung des leistenförmigen Abschnitts des Scheibenwischerarms (14) erstreckt.

5. Wisch- und Waschanlage nach Anspruch 3 oder 4, **dadurch gekennzeichnet**, daß zwei (54, 56) der Spritzöffnungen so angeordnet sind, daß sie auf die zu wischende Fläche (16) zwei Strahlen aufspritzen, deren Achsen (B, C) sich jeweils auf einer der beiden Seiten des Scheibenwischerarms (14) erstrecken, wobei sie einen spitzen Winkel im Verhältnis zur Längsrichtung des leistenförmigen Abschnitts des Scheibenwischerarms (14) bilden.

6. Wisch- und Waschanlage nach Anspruch 1 bis 5, **dadurch gekennzeichnet**, daß sich der Sicherungsstift (60) in Schließstellung des Deckels (42) außerhalb der Spritzkammer (40) erstreckt.

7. Wisch- und Waschanlage nach Anspruch 6 , **dadurch gekennzeichnet,** daß der Körper (34) der Spritzdüse (26) eine seitliche Trennwand (66) umfaßt, die den Sicherungsstift (60) so umschließt, daß er gegen Stöße geschützt ist.

8. Wisch- und Waschanlage nach einem der vorangehenden Ansprüche, **dadurch gekennzeichnet**, daß die Spritzdüse (26) aus geformtem Kunststoff ausgeführt ist.
